# EUROPEAN PATENT APPLICATION

(11) **EP 4 748 655 A1**
(43) Date of publication of application: **27.05.2026**
(21) Application number: 25217075.8
(22) Date of filing: 19.11.2025
(51) Int. Cl.: B60R 21/215, B60R 21/2165

(54) **INTERIOR PART AND MANUFACTURING METHOD**

(30) Priority: 20.11.2024 CN 202411667385
(71) Applicant: Faurecia Automotive Interior System (Shanghai) Co., Ltd., Shanghai 201109 (CN)
(72) Inventor: PEIHUA, Zhao, Shanghai, 201109 (CN); BIAO, Zhang, Shanghai, 201109 (CN)
(74) Representative: Pfenning, Meinig & Partner mbB

(57) **Abstract**

The present disclosure provides an interior part and a manufacturing method therefor. And the interior part includes a panel having a front surface and a back surface opposite to the front surface; and an airbag frame being arranged on a side of the back surface and connected to the back surface, the airbag frame providing a chamber, the chamber being able to accommodate an airbag; wherein the panel is set with a weakening line, the weakening line surrounds an area that defines an airbag cover, the airbag cover is able to be opened under the inflation pressure of the airbag; the weakening line has a closed contour, the weakening line includes an initial split portion, a sideline portion and a hinge portion, wherein the hinge portion and the sideline portion provide an outer contour line of the weakening line, the initial split portion is located within the area limited by the outer contour line; or the hinge portion, the sideline portion and the hinge portion provide the outer contour line of the weakening line; two ends of the initial split portion are respectively connected with the sideline portion, and tear resistance of the initial split portion, the sideline portion and the hinge portion are respectively Fa, Fb, Fc, wherein the Fa < Fb < Fc.

## Description

### Field

The present disclosure relates to an interior part and a manufacturing method therefor.

### Background

In vehicle interior parts, to ensure the normal deployment of airbags, an airbag cover is usually required to be arranged under the interior panel. The airbag cover is provided with a weakening line; when the airbag needs to function, the airbag inflates, and the airbag cover opens along the weakening line with low tear resistance, allowing the airbag to rush out from the open position to protect the occupants in the vehicle.

However, the current solutions have defects such as unexpected burst of the airbag cover at unintended positions, generation of debris, and/or difficulty in controlling the airbag deployment force within the expected range.

In addition, in the prior art, methods for processing the weakening line include cold knife cutting, milling, hot knife cutting, laser processing, etc. Among them, hot knife cutting is difficult to control due to low processing accuracy. For the technical solution using cold knife cutting, if a foaming process is required after cold knife cutting, a release agent needs to be added at the processing position to prevent re-gluing of the cold knife cut part, which not only consumes materials but also increases process steps, resulting in high material costs and production and processing costs. The milling process is also relatively complex. As for the laser processing solution, the laser processing equipment is very expensive, leading to high costs for this solution, and it is also difficult to adjust the depth of the holes forming the weakening line.

Therefore, there is a need in the art for an interior part and a manufacturing method thereof to solve one or a combination of the above technical problems.

### Summary

The present disclosure provides an interior part.

The present disclosure provides a manufacturing method.

The present disclosure provides an interior part according to embodiments of the disclosure. The interior part includes a panel having a front surface and a back surface opposite to the front surface; and an airbag frame being arranged on a side of the back surface and connected to the back surface, the airbag frame providing a chamber, the chamber being able to accommodate an airbag; wherein the panel is set with a weakening line, the weakening line surrounds an area that defines an airbag cover, the airbag cover is able to be opened under the inflation pressure of the airbag; the weakening line has a closed contour, the weakening line includes an initial split portion, a sideline portion and a hinge portion, wherein the hinge portion and the sideline portion provide an outer contour line of the weakening line, the initial split portion is located within the area limited by the outer contour line; or the hinge portion, the sideline portion and the hinge portion provide the outer contour line of the weakening line; two ends of the initial split portion are respectively connected with the sideline portion, and tear resistance of the initial split portion, the sideline portion and the hinge portion are respectively Fa, Fb, Fc, wherein the Fa < Fb < Fc.

In the above-described embodiment, the hinge portion and the sideline portion provide the outer contour line of the weakening line, the initial split portion is located within the area limited by the outer contour line; or the hinge portion, the sideline portion and the hinge portion provide the outer contour line of the weakening line. Two ends of the initial split portion are respectively connected with the sideline portion, and tear resistance of the initial split portion, the sideline portion and the hinge portion are respectively Fa, Fb, Fc, wherein the Fa < Fb < Fc. This structure forms an airbag weakening line structure similar to an H-shape or a U-shape, and the distribution of the initial split portion, the sideline portion and the hinge portion with different tear resistances at different positions of the airbag weakening line. The inventors have found that this can enable the airbag cover to burst better along the intended position, reduce the generation of debris, and make the airbag deployment force meet the expected setting corresponding to the weakening line.

In some embodiments of the present disclosure, the hinge portion includes a first hinge portion and a second hinge portion parallel to the first hinge portion; the sideline portion includes a first sideline portion and a second sideline portion parallel to the first sideline portion; wherein the first hinge portion, the second hinge portion, the first sideline portion, and the second sideline portion constitute a substantially square or rectangular shape; two ends of the initial split portion are respectively connected with the first sideline portion and the second sideline portion.

In some embodiments of the present disclosure, the sideline portion has multiple holes distributed along an extending direction of the sideline portion; and a first sideline hole and a second sideline hole are arranged side by side in a width direction of the sideline portion, the first sideline hole is located on a relatively inner side, the second sideline hole is located on a relatively outer side, an opening of the first sideline hole is located at the back surface, and an opening of the second sideline hole is located at the front surface.

In some embodiments of the present disclosure, the first sideline hole and the second sideline hole are blind holes.

In some embodiments of the present disclosure, the initial split portion has multiple holes distributed along an extending direction of the initial split portion; the hole is a through hole that penetrates through a thickness between the front surface and the back surface.

In some embodiments of the present disclosure, the hinge portion has multiple grooves distributed along an extending direction of the hinge portion, and a bottom part of the groove provides a rotating shaft of the hinge portion.

In some embodiments of the present disclosure, the airbag frame is integrally connected with the panel.

In some embodiments of the present disclosure, the back surface is set with an airbag protective mesh within the area defining the airbag cover surrounded by the weakening line.

In some embodiments of the present disclosure, the interior part serves as at least part of a dashboard, a door panel, or a roof; and the interior part further includes a decorative layer, the decorative layer is located on a side of the front surface of the panel, and covers the front surface.

In addition, the present disclosure provides a manufacturing method according to embodiments of the disclosure. The manufacturing method is for the interior part as described in the first aspect, the method including the following steps: obtaining a mold corresponding to the structure of the interior part, the mold being corresponding to injection molding for the panel, the airbag frame, and the weakening line; and performing injection molding on the mold to obtain the interior part which is integrally formed with the panel, the airbag frame, and the weakening line.

The beneficial effects of the embodiments of the above manufacturing method are as follows: the interior part is processed by injection molding. In terms of processing equipment, only injection molding equipment for processing the panel is needed, and there is no need to purchase additional equipment such as hot knives, cold knives, milling machines, or lasers as in the prior art. In terms of processing technology, the subsequent processes of hot knife cutting, cold knife cutting, milling, or laser drilling are also omitted, reducing processing costs. Moreover, since the interior part is the one according to the first aspect, even if it is integrally formed by injection molding, it can still meet the requirements that the airbag cover can burst along the intended position, reduce the generation of debris, and make the airbag deployment force meet the expected setting corresponding to the weakening line.

### Description of attached drawings

The above and other features, properties, and advantages of the present disclosure will become more apparent through the following description in conjunction with the accompanying drawings and embodiments, where:
FIG. 1 is a schematic structural diagram of a vehicle interior system;
FIG. 2 is a schematic diagram of an airbag weakening line of an interior part (10) according to some embodiments;
FIG. 3 is a schematic cross-sectional view along A-A of FIG. 2;
FIG. 4 is a schematic cross-sectional view along B-B of FIG. 2;
FIG. 5 is a schematic cross-sectional view along C-C of FIG. 2;
FIG. 6 is a schematic cross-sectional view along D-D of FIG. 2;
FIG. 7 is a schematic structural diagram of a separate-type interior part;
FIG. 8 is a schematic structural diagram of an integrated interior part.

### Reference Numerals:

1000 - Interior system
1001 - Dashboard
1002 - Door panel
1003 - Center console
10 - Interior part
1 - Panel
11 - Front surface
12 - Back surface
13 - Weakening line
130 - Airbag cover
131 - Initial split portion
1310 - Hole
132 - Sideline portion
1321 - First sideline portion
1322 - Second sideline portion
13201 - First sideline hole
13202 - Second sideline hole
133 - Hinge portion
1330 - Groove
13301 - Bottom of the groove
1331 - First hinge portion
1332 - Second hinge portion
14 - Airbag protective mesh
3 - Decorative layer
2 - Airbag frame
21 - Chamber
20 - Airbag.

### Detailed Description of Embodiments

Hereinafter, embodiments of the technical solution of the present disclosure will be described in detail with reference to the drawings. And embodiments are merely used to more clearly explain the technical solution of the present disclosure, and therefore are merely examples, and should not limit the scope of protection of the present disclosure.

Unless otherwise defined, all technical and scientific terms used herein have the same meaning as commonly understood by those skilled in the art of the present disclosure. The terms used herein are for the purpose of describing embodiments only and not intended to limit the present disclosure; The terms "including" and "having" and any variations thereof in the specification and claims of the present disclosure and the above description of drawings are intended to cover non-exclusive inclusions.

In the embodiments of the present disclosure, the technical terms "first", "second" and the like are only used to distinguish different objects, and should not be understood to indicate or imply relative importance or implicitly indicate the number, specific order, or primary-secondary relationship of the indicated technical features. In the embodiments of the present disclosure, "a plurality" means two or more unless otherwise explicitly and specifically defined.

An "embodiment" means that a particular feature, structure, or characteristic described may be included in at least one embodiment of the present disclosure. The appearance of the word "embodiment" in various places in the specification does not necessarily refer to the same embodiment, nor refer to an independent or alternative embodiment that is mutually exclusive from other embodiments. It may be explicitly and implicitly understood by those skilled in the art that the embodiments described herein may be combined with other embodiments.

In the embodiments of the present disclosure, the technical terms such as "center", " longitude", " latitude", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on the orientation or positional relationships shown in the drawings, and are merely used to facilitate and simplify the description of the embodiments of the present disclosure, and do not indicate or imply that the referred device or element must have a specific orientation, be constructed and operated in a specific orientation, and therefore cannot be understood as a limitation of the embodiments of the present disclosure.

In the embodiments of the present disclosure, unless otherwise explicitly specified and defined, technical terms such as "mounted", "linked", "connected" and "fixed" should be understood in a broad sense, for example, they may be fixed connected, detachable connected, or integrated; It may also be a mechanical connection, and those skilled in the art can understand the specific meanings of the above terms in the embodiments of the present disclosure according to specific circumstances.

Although the interior part disclosed in the embodiments of the present disclosure is applicable to automobiles, it is not limited thereto. For example, it can be applied to other kinds of vehicles such as railway trains, ships, aircraft, etc., as long as the vehicles have airbags to improve safety performance, the interior part disclosed in the embodiments can be applied.

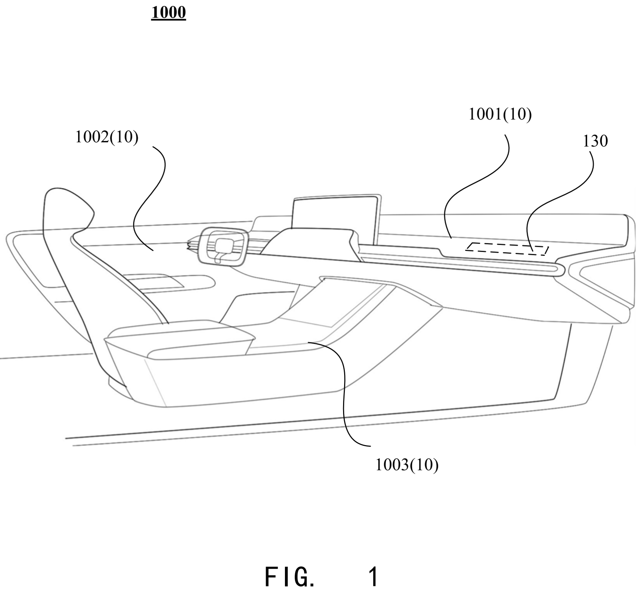

Referring to FIG. 1, taking a vehicle interior system 1000 as an example, it includes interior parts such as a dashboard 1001, a door panel 1002, a center console 1003, etc. Currently, the dashboard 1001 and the door panel 1002 are generally of a split structure, and the dashboard 1001 and the door panel 1002 can be clearly distinguished visually. However, it does not exclude the solution where the dashboard 1001 and the door panel 1002 have similar structures, forming an interior system 1000 with an integrated visual appearance of the dashboard 1001 and the door panel 1002.

In the interior system, an airbag 20 is generally arranged under the dashboard 1001, but this is not a limitation. For example, the door panel 1002 and the roof may also be provided with airbags 20, i.e., side airbags and top airbags are arranged to further improve vehicle safety. The interior part 10 described in the following embodiments takes the interior part 10 of the dashboard 1001 as an example, because the dashboard 1001 is a component located at the front position and is the most typical disclosure scenario for airbags 20.

Referring to FIGs. 1 to 6, as well as FIGs. 7 and 8, in some embodiments, the interior part 10 includes a panel 1 and an airbag frame 2. The panel 1 has a front surface 11 and a back surface 12 opposite to the front surface 11. The airbag frame 2 is arranged on one side of the back surface 12 and connected to the back surface 12, and the airbag frame 2 provides a chamber 21 capable of accommodating an airbag 20.

The material of the panel 1 can be plastic, such as common polypropylene PP plastic, or acrylonitrile-butadiene-styrene copolymer ABS plastic, PC/ABS alloy ABS engineering plastic, etc. For example, it can also be a composite material, where the matrix of the composite material is plastic, and the reinforcing material is fiber material, such as natural fiber and/or synthetic fiber, forming a fiber-reinforced plastic composite material. For example, natural fiber-reinforced PP NFPP, glass fiber-reinforced PP GFPP, composite material rCF NFPP composed of 40% natural fiber, 50% polypropylene, and 10% recycled carbon fiber, and composite material NAFILean^{®} combining natural hemp fiber with PP, etc. The types of natural fibers can include wood fiber, kenaf, hemp, jute, flax, ramie, rattan, soybean, okra coffee okra, banana plant, bamboo, coconut, coir fiber, cotton fabric, curaua fiber pineapple leaf fiber, abaca Manila hemp, pine, pineapple, raffia palm leaf raffia farinifera, and/or sisal. Synthetic fibers include, for example, carbon fiber, polyester fiber, acrylic fiber, aramid fiber, Twaron fiber, Kevlar fiber, Technoral fiber, Vinalon fiber, Zylon fiber, and/or polypropylene fiber, etc.

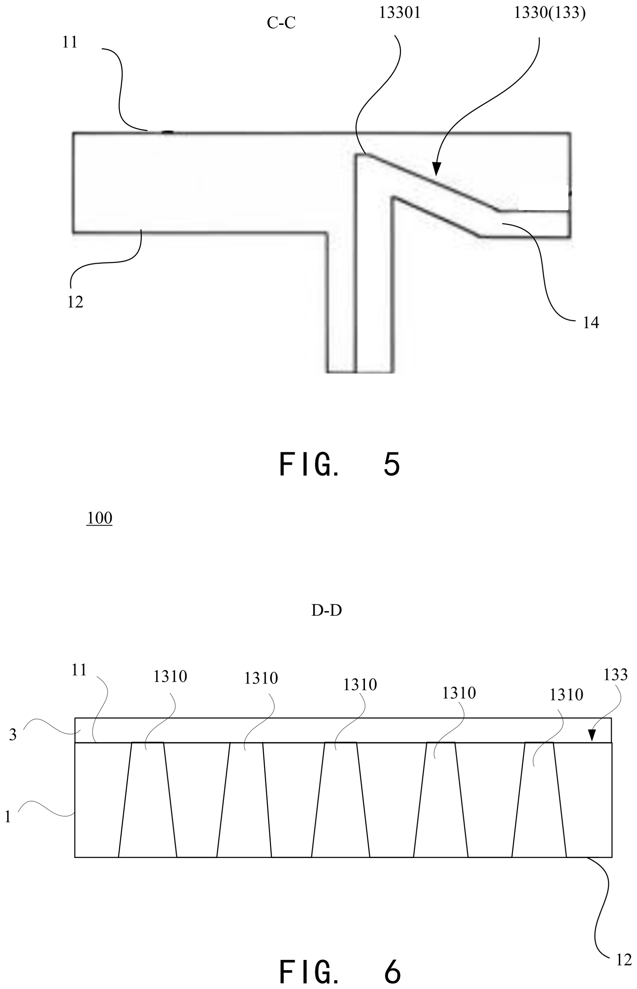

As shown in FIG. 6, in some embodiments, the interior part 10 further includes a decorative layer 3 located on one side of the front surface 11 of the panel 1 and covering the front surface 11. The decorative layer 3 is a surface skin in the form of genuine leather, artificial leather, engineering plastic, etc. For example, it is a structure with a soft intermediate layer material such as interior foam, 3D spacer fabric. This can make the interior part 10 have a better visual effect for the user. The decorative layer 3 can also be provided with a weakening line, and the specific structure may coincide with the contour of the weakening line 13 described below, but this is not a limitation. It can be understood that to provide a better visual effect, the weakening line is generally invisible to the user.

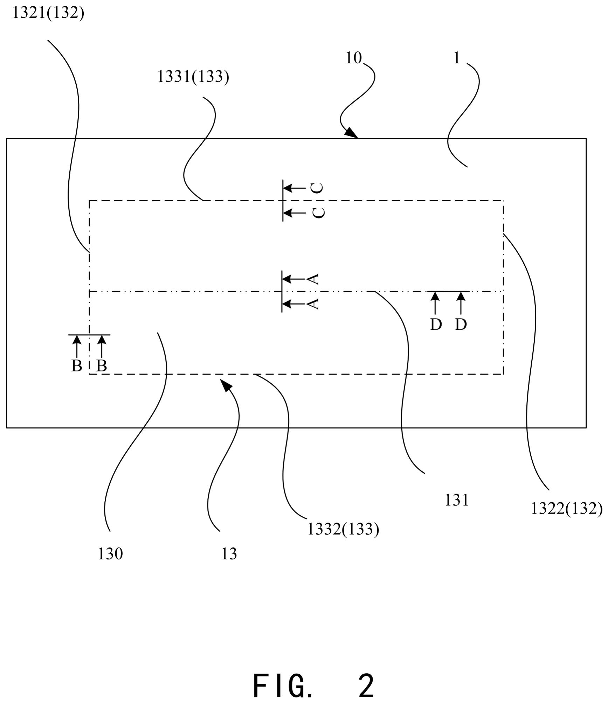

As shown in FIG. 2, the panel 1 is set with a weakening line 13, the weakening line 13 surrounds an area that defines an airbag cover 130, and the airbag cover 130 is able to be opened under the inflation pressure of the airbag 20.

The weakening line 13 has a closed contour, and the weakening line 13 includes an initial split portion 131, a sideline portion 132 and a hinge portion 133. The hinge portion 133 and the sideline portion 132 provide an outer contour line of the weakening line 13, and the initial split portion 131 is located within the area limited by the outer contour line. Or the hinge portion 133, the sideline portion 132 and the hinge portion 133 provide the outer contour line of the weakening line 13. Two ends of the initial split portion 131 are respectively connected with the sideline portion 132, and tear resistance of the initial split portion 131, the sideline portion 132 and the hinge portion 133 are respectively Fa, Fb, Fc, wherein the Fa < Fb < Fc. The tear resistance here refers to the tear resistance that generally remains unchanged along the extending direction of the initial split portion 131, the sideline portion 132, and the hinge portion 133.

The initial split portion 131 is one part of the weakening line that first tears under the pressure of the airbag when the airbag is inflated. Subsequently, the tear propagates along the sideline portion 132, while the hinge portion 133 does not tear and is expected to act as a hinge for the airbag cover 130, so that when the initial split portion 131 and the sideline portion 132 tear, the airbag cover 130 rotates around the hinge portion 133 under the pressure of the airbag 20.

The airbag 20 is generally configured with an airbag inflation assembly. The airbag 20 is usually in a folded state when not inflated. For example, when the vehicle detects an accident such as a collision, the airbag inflation assembly is triggered to inflate the airbag 20. During inflation, the airbag 20 expands in the chamber 21.

When the airbag 20 is inflated, it first abuts against the airbag cover 130 on the back surface 12 of the panel 1. As the airbag 20 continues to expand, the pressure on the airbag cover 130 increases. When the airbag pressure i.e., deployment force on the airbag cover 130 exceeds a preset value, tearing starts in the initial split portion 131. The tear propagates to the sideline portions 132 on both sides of the initial split portion 131, and then to the two ends of the sideline portion 132 along its extending direction. When the tear reaches the two ends of the sideline portion 132 along its extending direction, the airbag cover 130 rotates and opens around the hinge portion 133, and the airbag 20 breaks through the interior part 10 and expands into the passenger compartment.

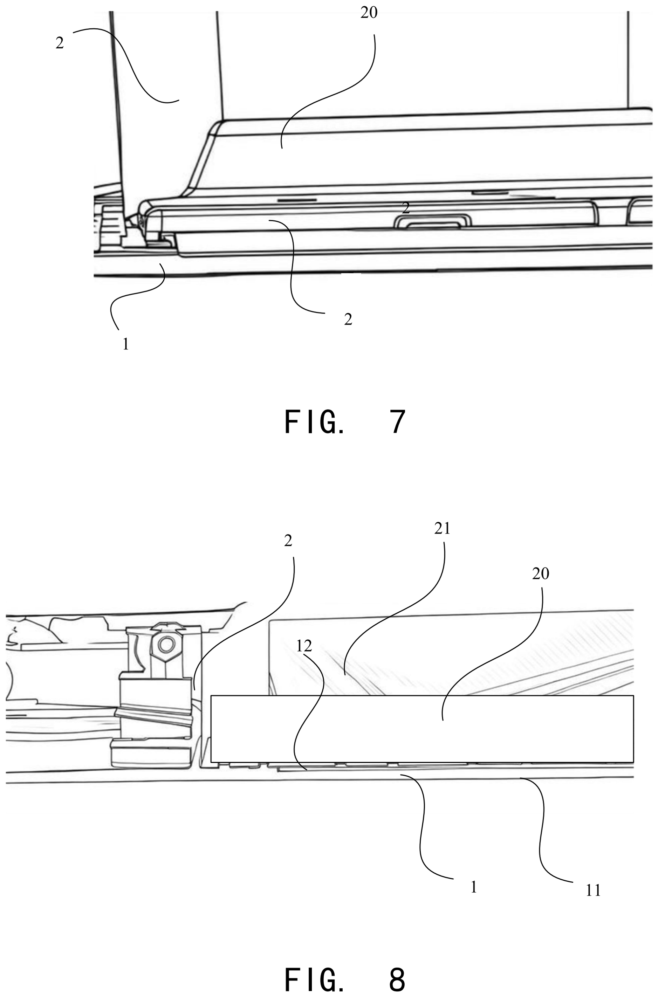

It can be understood that the solution of the interior part 10 in the above-described embodiments is able to make the airbag cover 130 burst better along the intended position, reduce the generation of debris, and make the airbag deployment force meet the expected setting corresponding to the weakening line 13. Especially for the structure where the airbag frame 2 is integrally connected with the panel 1 as shown in FIG. 8, such as the interior part 10 obtained by the injection molding manufacturing method, it optimizes the performance that the airbag cover 130 can burst better along the intended position, reduces the generation of debris, and makes the airbag deployment force meet the expected setting corresponding to the weakening line 13. In contrast, for the split structure of the airbag frame 2 and the panel 1 as shown in FIG. 7, the interior part 10 of the embodiment is also able to optimize the effect of the airbag cover 130 fracturing along the intended position and reduce the generation of debris, but the optimization level is not as significant as that of the integrally connected structure.

As shown in FIG. 2, in some embodiments, structures of the hinge portion, the sideline portion, and the initial split portion are as follows: the hinge portion 133 includes a first hinge portion 1331 and a second hinge portion 1332 parallel to the first hinge portion 1331; the sideline portion 132 includes a first sideline portion 1321 and a second sideline portion 1322 parallel to the first sideline portion 1321; wherein the first hinge portion 1331, the second hinge portion 1332, the first sideline portion 1321, and the second sideline portion 1322 constitute a substantially square or rectangular shape; two ends of the initial split portion 131 are respectively connected with the first sideline portion 1321 and the second sideline portion 1322. In some embodiments, the two ends of the initial split portion 131 are located at the midpoints of the first sideline portion 1321 and the second sideline portion 1322. The thus formed tear propagation similar to an H-shape, the inventors have found, is able to further optimize the effect of fracturing along the intended position and reducing the generation of debris. It can be understood that a fillet transition is able to be set between the sideline portion 132 and the hinge portion 133. It can also be understood that the contour of the weakening line 13 is not limited to the rectangular H-shape shown in the drawings, but can also be a square, an ellipse, or a combined structure. For example, the contour of the weakening line 13 can also be a U-shape-like structure, i.e., the hinge portion 133, the sideline portion 132 and the hinge portion 133 provide the outer contour line of the weakening line 13. The H-shape-like structure shown in FIG. 2 is similar to a "two-door" structure, i.e., the portion from the initial split portion 131 to the upper and lower first hinge portion 1331 and second hinge portion 1332 bursts open. The portion from the initial split portion 131 to the first hinge portion 1331 is a first door, and the portion from the initial split portion 131 to the second hinge portion 1332 is a second door. When the airbag 20 inflates, the first door and the second door open simultaneously, forming a two-door structure. It can also be a U-shape single-door structure. In this embodiment, the hinge portion 133 is separately arranged at the position of the first hinge portion 1331 in FIG. 2, and the initial split portion 131 is arranged at the position of the second hinge portion 1332 in FIG. 2, thus forming a single-door structure where the portion between the initial split portion 131 and the hinge portion 133 opens when the airbag 20 inflates.

As shown in FIG. 6, the structure of the weakening line 13 generally includes multiple holes or grooves along the extending direction. The different tear resistances of the weakening line 13 can be adjusted by structural parameters such as the number of grooves/holes, the opening size of the holes, the length of the grooves, the ratio of the hole depth to the panel thickness, and the spacing between adjacent holes/grooves. This is content that should be known to those skilled in the art and will not be introduced here.

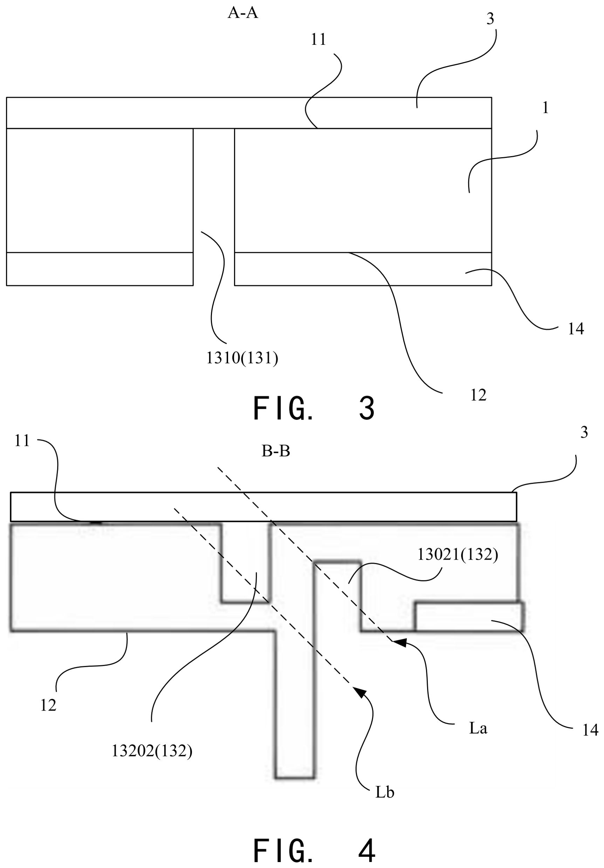

Referring to FIG. 4, in some embodiments, the structure of the sideline portion 132 is as follows: the sideline portion 132 has multiple holes distributed along an extending direction of the sideline portion 132; and a first sideline hole 13201 and a second sideline hole 13202 are arranged side by side in a width direction of the sideline portion 132, the first sideline hole 13201 is located on a relatively inner side, the second sideline hole 13202 is located on a relatively outer side, an opening of the first sideline hole 13201 is located at the back surface 12, and an opening of the second sideline hole 13202 is located at the front surface 11. The inventors have found that the structure of two holes arranged side by side in the width direction can further limit the deployment direction of the airbag 20 and reduce debris when the airbag 20 inflates. In some embodiments, the first sideline hole 13201 and the second sideline hole 13202 are blind holes. As shown in FIG. 4, the deployment direction of the airbag 20 can be limited to the range between line La and line Lb.

Referring to FIG. 3, in some embodiments, the structure of the initial split portion 131 is provided with multiple holes 1310 distributed along an extending direction of the initial split portion 131; the hole is a through hole that penetrates through a thickness between the front surface 11 and the back surface 12. The beneficial effect of this is that the processing technology is relatively simple.

Referring to FIG. 5, in some embodiments, the hinge portion 133 has multiple grooves 1330 distributed along an extending direction of the hinge portion 133, and a bottom part 13301 of the groove provides a rotating shaft of the hinge portion 133, such as the V-shaped groove structure shown in FIG. 5, but this is not a limitation. For example, it can also be a flat-bottomed groove. The hinge portion 133 adopting the groove structure has a relatively stable structure and is easy to process.

As shown in FIGS. 3 to 5, in some embodiments, the back surface 12 is set with an airbag protective mesh 14 within the area defining the airbag cover 130 surrounded by the weakening line 13. The airbag protective mesh 14 is used to contact the airbag 20, and the material of the airbag protective mesh 14 can be, for example, a fabric woven cloth by mixing polyester fiber and aramid, but this is not a limitation. The structure of the airbag protective mesh 14 is able to further reduce debris when the airbag 20 inflates.

It can be understood that the present disclosure also provides a manufacturing method for manufacturing the interior part 10 as described in the above embodiments. The manufacturing method includes the following steps:
obtaining a mold corresponding to the structure of the interior part 10, the mold being corresponding to injection molding for the panel 1, the airbag frame 2, and the weakening line 13; and
performing injection molding on the mold to obtain the interior part 10 which is integrally formed with the panel 1, the airbag frame 2, and the weakening line 13.

In summary, the beneficial effects of the interior part 10 and the manufacturing method of the above embodiments include, but are not limited to: the hinge portion 133 and the sideline portion 132 provide the outer contour line of the weakening line 13, and the initial split portion 131 is located within the area limited by the outer contour line; or the hinge portion 133, the sideline portion 132 and the hinge portion 133 provide the outer contour line of the weakening line 13. Two ends of the initial split portion 131 are respectively connected with the sideline portion 132, and tear resistance of the initial split portion 131, the sideline portion 132 and the hinge portion 133 are respectively Fa, Fb, Fc, wherein the Fa < Fb < Fc. This structure forms an airbag weakening line structure similar to an H-shape or a U-shape, and the distribution of the initial split portion 131, the sideline portion 132 and the hinge portion 133 with different tear resistances at different positions of the airbag weakening line 13. The inventors have found that this can enable the airbag cover 130 to burst better along the intended position, reduce the generation of debris, and make the airbag deployment force meet the expected setting corresponding to the weakening line 13. The interior part 10 is processed by the injection molding manufacturing method. In terms of processing equipment, only injection molding equipment for processing the panel 1 is needed, and there is no need to purchase additional equipment such as hot knives, cold knives, milling machines, or lasers as in the prior art. In terms of processing technology, the subsequent processes of hot knife cutting, cold knife cutting, milling, or laser drilling are also omitted, reducing processing costs. Moreover, since the interior part 10 described in the embodiment is adopted, even if it is an integrally formed structure by injection molding, it can still meet the requirements that the airbag cover 130 is able to burst along the intended position, reduce the generation of debris, and make the airbag deployment force meet the expected setting corresponding to the weakening line 13.

Although the present disclosure is disclosed as above with embodiments, it is not intended to limit the present disclosure. Any person skilled in the art can make possible changes and modifications without departing from the spirit and scope of the present disclosure. Therefore, any modification, equivalent change, and modification made to the above embodiments according to the technical essence of the present disclosure without departing from the content of the technical solution of the present disclosure shall fall within the scope defined by the claims of the present disclosure.

## Claims

1. An interior part (10), comprising:
a panel (1) having a front surface (11) and a back surface (12) being opposite to the front surface (11); and
an airbag frame (2) being arranged on a side of the back surface (12) and connected to the back surface (12), and the airbag frame (2) providing a chamber (21), and the chamber (21) being able to accommodate an airbag (20);
wherein the panel (1) is set with a weakening line (13), and the weakening line (13) surrounds an area that defines an airbag cover (130), and the airbag cover (130) is set to be open up under the pressure of the airbag (20);
and the weakening line (13) has a closed contour, and the weakening line (13) comprises an initial split portion (131), a sideline portion (132) and a hinge portion (133),
wherein the hinge portion (133) and the sideline portion (132) provide an outer contour line of the weakening line (13), the initial split portion (131) is located within the area limited by the outer contour line; or, the hinge portion (133), the sideline portion (132) and the hinge portion (133) provide the outer contour line of the weakening line (13);
wherein two ends of the initial split portion (131) are respectively connected with the sideline portion (132), and tear resistance of the initial split portion (131), the sideline portion (132) and the hinge portion (133) are respectively Fa, Fb, Fc, and the Fa<Fb<Fc.

2. The interior part (10) of claim 1, wherein,
the hinge portion (133) comprises a first hinge portion (1331) and a second hinge portion (1332) parallel to the first hinge portion (1331);
the side portion (132) comprises a parallel first sideline portion (1321) and a second sideline portion (1322) parallel to the first sideline portion (1321);
wherein, the first hinge portion (1331), the second hinge portion (1332), the first sideline portion (1321), and the second sideline portion (1322) constitute a square or rectangular shape; and
two ends of the initial split portion (131) are respectively connected with the first sideline portion (1321) and the second sideline portion (1322).

3. The interior part (10) of claim 1, wherein the sideline portion (132) has multiple holes distributed along an extending direction of the sideline portion (132); and a first sideline hole (13201) and the second sideline hole (13202) are arranged side by side in width direction of one sideline portion (132), and the first sideline hole (13201) is located on a relatively inner side, and the second sideline hole (13202) is located on a relatively outer side, and opening of the first sideline hole (13201) is located at the back surface (12), and the opening of the second sideline hole (13202) is located at the front surface (11).

4. The interior part (10) of claim 3, wherein the first sideline hole (13201) and the second sideline hole (13202) are blind holes.

5. The interior part (10) of claim 1, wherein the initial split portion (131) has multiple holes (1310) distributed along an extending direction of the initial split portion (131); and the hole is a through hole that penetrates through thickness between the front surface (11) and the back surface (12).

6. The interior part (10) of claim 1, wherein the hinge portion (133) has multiple grooves (1330) distributed along an extending direction of the hinge portion (133), and a bottom part (13301) of the groove provides a rotating shaft of the hinge portion (133).

7. The interior part (10) of claim 1, wherein the airbag frame (2) is integrally connected with the panel (1).

8. The interior part (10) of claim 1, wherein the back surface (12) is set with an airbag protective mesh (14) within the area defining the airbag cover (130) surrounded by the weakening line (13).

9. The interior part (10) of claim 1, wherein the interior part (10) is at least part of a dashboard (1001), a door panel (1002), or a roof; and the interior part (10) further comprises a decorative layer (3), and the decorative layer (3) is located on a side of the front surface (11) of the panel (1), and covers the front surface (11).

10. A manufacturing method for the interior part (10) as described in any one of claims 1-9, and the method comprising following steps:
obtaining a mold corresponding to the structure of the interior part (10), and the mold being corresponding to injection molding for the panel (1), the airbag frame (2), and the weakening line (13); and
the mold being injection molded to obtain an interior part (10) by injection molding, wherein the panel (1), the airbag frame (2), and the weakening line (13) are integrally connected.
